# FASCICULE DE BREVET EUROPEEN

(11) **EP 0 906 843 B1**
(45) Date de publication et mention de la délivrance du brevet: **04.09.2002**
(21) Numéro de dépôt: 98203172.6
(22) Date de dépôt: 21.09.1998
(51) Int. Cl.: B60K 15/03

(54) **Réservoir**
Tank
Tank

(30) Priorité: 03.10.1997 BE 9700800
(43) Date de publication de la demande: 07.04.1999
(73) Titulaire: Inergy Automotive Systems Research (SA), 1120 Bruxelles (BE)
(72) Inventeur: Wouters, Paul, 1800 Bruxelles (BE); Thibaut, Denis, 1500 Halle (BE)
(74) Mandataire: Decamps, Alain René François

(56) Documents cités:
- EP-A- 0 695 779
- DE-C- 3 641 356
- US-A- 5 213 734

## Description

La présente invention concerne un type particulier de réservoir en matière plastique destiné à contenir un liquide tel que par exemple un carburant.

Une proportion croissante des réservoirs à carburant actuellement installés dans des véhicules sont essentiellement constitués de matière plastique. Toutefois, un problème bien connu de ce type de réservoirs concerne leur imperméabilité. En effet, les matières plastiques couramment utilisées pour leur fabrication, telles que les polyoléfines, ne sont pas totalement imperméables aux carburants généralement utilisés, et en particulier aux carburants contenant des alcools. L'imperméabilité constitue toutefois une caractéristique importante des réservoirs à carburant, en particulier en raison des normes officielles de plus en plus strictes concernant les émissions de vapeurs de carburant imposées aux véhicules automobiles.

Diverses solutions ont déjà été proposées pour améliorer l'imperméabilité de réservoirs à base de matière plastique. Il est notamment courant de soumettre l'intérieur de réservoirs à carburant en matière plastique à un traitement superficiel approprié, par exemple à une fluoration ou à une sulfonation, comme décrit notamment dans les documents US 5213734 ou EP 695779 (SOLVAY (société anonyme)) l'ultérieur formant l'état de la téchnique le plus proche selon le préambule de la revendication 1. Un tel traitement superficiel conduit à la formation d'une mince couche barrière sur la surface intérieure du réservoir. Cette solution est très efficace à court et à moyen terme, mais on a constaté que dans certaines conditions d'utilisation, les mouvements du carburant à l'intérieur du réservoir provoquent une érosion de la couche barrière, et par conséquent une détérioration de l'imperméabilité du réservoir à long terme. Ce problème d'érosion, qui est particulièrement aigu dans les réservoirs montés sur des véhicules (en mouvement), peut être encore aggravé par la présence de particules solides (poussières, etc.) dans le carburant.

La présente invention vise à remédier à ce problème, et à fournir un réservoir en matière plastique ayant subi un traitement superficiel interne, qui, tout en pouvant être constitué de matières plastiques usuelles, présente une imperméabilité élevée et durable à long terme.

Plus précisément, la présente invention concerne un réservoir à liquide essentiellement constitué de matière plastique, dont la surface intérieure a été traitée superficiellement en vue d'accroître son imperméabilité audit liquide, caractérisé en ce qu'au moins une partie de la surface intérieure du réservoir est munie de protubérances aptes à entraver le déplacement du liquide.

Un tel réservoir présente une imperméabilité élevée et durable, en particulier vis-à-vis de carburants. Ce résultat est d'autant plus surprenant que la présence des protubérances provoque inévitablement un accroissement de la superficie de la surface intérieure du réservoir, ainsi que des amincissements locaux de sa paroi, et que l'on s'attendrait dès lors à une détérioration de son imperméabilité.

Par réservoir à liquide, on entend désigner tout corps creux destiné à contenir un liquide. Le réservoir décrit ci-dessus est très avantageux lorsqu'on l'utilise comme réservoir à carburant. Cette application n'est toutefois pas limitative, le réservoir selon l'invention pouvant également, à titre d'exemple, servir de récipient pour hydrocarbures quelconques, pour solvants, etc. En particulier, le réservoir selon l'invention est avantageusement utilisé dans des véhicules automobiles.

La matière plastique comprend un ou plusieurs polymères, ainsi qu'éventuellement un ou plusieurs additifs usuels tels que stabilisants, antioxydants, pigments, lubrifiants, ignifugeants, agents antistatiques, matières de charge et/ou de renforcement, etc. Le ou les polymères utilisés sont généralement des polymères thermoplastiques, et plus particulièrement des polyoléfines. Comme polymère, on préfère utiliser du polyéthylène (PE), en particulier du PE de haute densité (HDPE). Outre une couche intérieure essentiellement constituée d'au moins une matière plastique, le réservoir peut éventuellement comporter une ou plusieurs autres couches, à base d'une ou plusieurs matières plastiques identiques ou différentes. Selon une variante particulièrement simple, la paroi du réservoir est constituée d'une seule matière plastique, c'est-à-dire qu'il s'agit d'un réservoir monocouche. Ceci n'exclut pas la présence d'accessoires usuels tels que connexions de tubulures de remplissage et/ou de raccordement au moteur, inserts, etc., constitués de matériaux éventuellement différents.

Lorsque la paroi du réservoir est entièrement constituée de matière thermoplastique, une technique couramment utilisée pour sa fabrication est l'extrusion-soufflage. Cette technique convient aussi bien aux réservoirs monocouches que multicouches. Un tel réservoir peut également être fabriqué par toute autre technique usuelle, par exemple par injection et soudage, par rotomoulage, etc.

Les traitements superficiels utilisables en vue d'accroître l'imperméabilité du réservoir, en particulier vis-à-vis de carburants, sont bien connus en tant que tels ; il s'agit par exemple de traitements de fluoration et/ou de sulfonation, ou encore de traitements corona, plasma, etc. De tels traitements superficiels peuvent être réalisés au moment même de la fabrication du réservoir ("procédés on-line") ou bien ultérieurement ("procédés off-line"), en une ou plusieurs étapes. Ce ou ces traitements peuvent concerner toute la surface intérieure du réservoir, ou seulement une ou certaines zones de cette surface. Ils conduisent à la formation d'une mince couche barrière sur la surface intérieure du réservoir. Par exemple, dans le cas d'un traitement de fluoration appliqué à un réservoir en polyéthylène, on peut obtenir la formation d'une couche de polyéthylène fluoré dont l'épaisseur est typiquement de quelques microns ou dixièmes de microns. L'invention donne de très bons résultats dans le cas où la surface intérieure du réservoir a été traitée par fluoration et/ou par sulfonation.

Les protubérances peuvent être de tout type, par exemple des plots ou des nervures, pourvu qu'elles soient aptes à entraver le déplacement du liquide à proximité immédiate de la partie de la surface intérieure du réservoir qui en est munie. Elles peuvent avantageusement se présenter sous la forme de nervures, qui peuvent notamment être rectilignes, polygonales et/ou courbes. Avantageusement, les nervures délimitent des zones fermées, par exemple des zones hexagonales ou rectangulaires, dont le centre ("le fond") est ainsi plus bas que le sommet des nervures. Il est par ailleurs avantageux que les protubérances soient espacées de manière substantiellement régulière. De très bons résultats ont été obtenus lorsque les nervures sont disposées selon des réseaux substantiellement perpendiculaires de nervures substantiellement rectilignes, parallèles et équidistantes, définissant ainsi des zones approximativement rectangulaires. Un avantage accessoire de la présence de ces protubérances est qu'elles peuvent contribuer à améliorer la résistance mécanique du réservoir (rigidification, etc.). Naturellement, la géométrie exacte des protubérances (par exemple leurs rayons de courbure dans un plan perpendiculaire à la paroi du réservoir) doit être choisie en respectant les contraintes imposées par le procédé de fabrication utilisé.

La hauteur des protubérances est généralement de l'ordre de quelques millimètres. Une hauteur d'au plus 20 mm, et de préférence d'au plus 15 mm, donne de bons résultats. Par ailleurs, la hauteur des protubérances est avantageusement d'au moins 3 mm, et de préférence d'au moins 5 mm.

La largeur moyenne des protubérances (mesurée à mi-hauteur) est généralement du même ordre de grandeur que leur hauteur. Il est toutefois inutile de donner aux protubérances une largeur moyenne excessive, ce qui aurait pour conséquence d'accroître la proportion de la superficie des protubérances par rapport à la superficie totale de la surface intérieure du réservoir, avec le risque d'une détérioration de son imperméabilité globale. La largeur moyenne des protubérances est habituellement fixée légèrement au-delà de la largeur minimale imposée par les contraintes liées au procédé de fabrication utilisé ; ainsi, dans la plupart des cas, cette largeur moyenne sera au moins deux fois égale à l'épaisseur de la paroi du réservoir. La largeur moyenne des protubérances est avantageusement supérieure à 3 fois l'épaisseur de la paroi du réservoir, et de préférence supérieure à 4 fois cette épaisseur. Par ailleurs, des largeurs moyennes inférieures à 6 fois cette épaisseur, et de préférence inférieures à 5 fois cette épaisseur, ont donné de bons résultats.

L'écartement entre deux nervures voisines est généralement de l'ordre de quelques dizaines de millimètres. Il s'est révélé avantageux que l'écartement des protubérances soit d'au moins 3 fois leur hauteur, et de préférence d'au moins 4 fois leur hauteur. Par ailleurs, cet écartement est avantageusement d'au plus 9 fois leur hauteur, et de préférence d'au plus 6 fois leur hauteur. Un écartement d'au moins 20 mm, et en particulier d'au moins 35 mm, donne de bons résultats. Par ailleurs, l'écartement est avantageusement d'au plus 100 mm, et de préférence d'au plus 70 mm.

La totalité de la surface intérieure du réservoir peut être munie de protubérances. Toutefois, normalement, l'érosion s'exerce principalement sur la paroi inférieure du réservoir, qu'il s'agisse de l'érosion due aux mouvements du liquide ou à d'éventuelles particules solides. Dès lors, il est avantageux qu'au moins la paroi inférieure de la surface intérieure du réservoir soit munie de protubérances. Selon une variante particulièrement simple de la présente invention, seule cette paroi inférieure est munie de protubérances. (Par paroi inférieure, on entend désigner la paroi qui forme le fond du réservoir lorsque celui-ci se trouve dans sa position d'utilisation normale.)

Les protubérances peuvent être réalisées par toute technique appropriée. Ainsi, par exemple, des nervures préfabriquées se présentant sous la forme d'une ou plusieurs grilles d'un matériau adéquat, peuvent être fixées sur la surface intérieure du réservoir pendant ou après sa fabrication.

On préfère toutefois que les protubérances fassent partie intégrante de la paroi du réservoir. A cette fin, des éléments en relief de formes et de dimensions appropriées peuvent être présents à la surface du moule utilisé pour la fabrication du réservoir, en vue de créer des protubérances dans la paroi du réservoir lors de sa fabrication par moulage. Ces éléments en relief peuvent faire partie intégrante du moule, ou avoir été fixés ultérieurement à un moule classique préexistant. Cette variante est avantageuse dans la mesure où elle permet la réutilisation de moules existants moyennant des modifications mineures. On peut encore utiliser un moule muni d'éléments en relief mobiles (rétractables), dont on provoque le déplacement à un moment donné du processus de fabrication.

### DESCRIPTION DES FIGURES

Les figures annexées illustrent de façon non limitative l'invention.

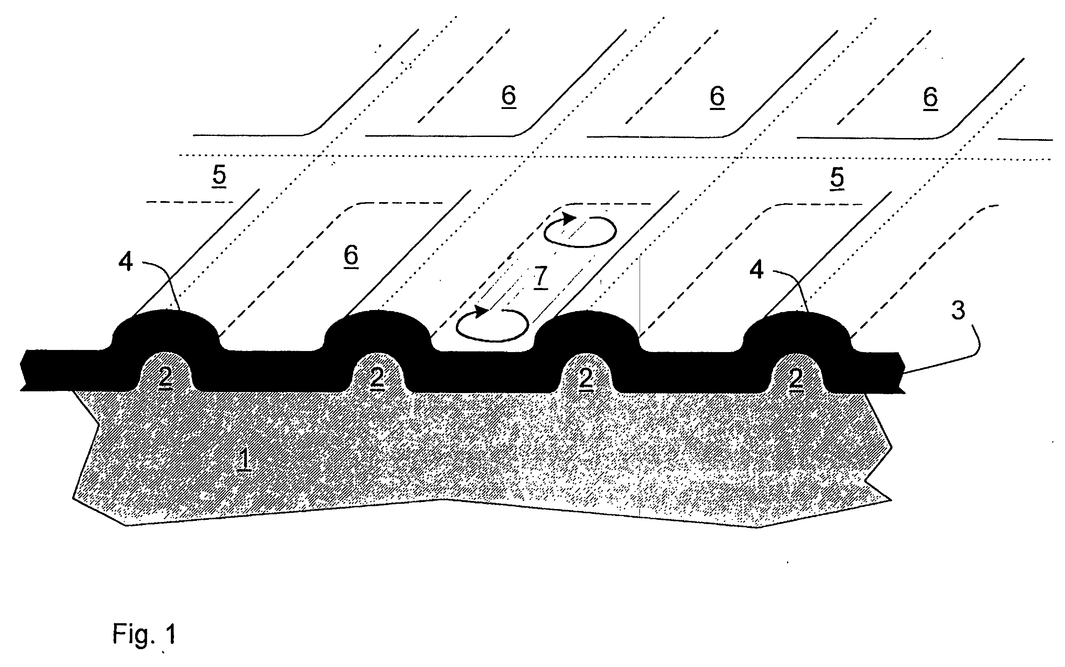

La figure 1 illustre plus précisément la fabrication d'un réservoir conforme à l'invention. Elle représente, en coupe et en perspective, un moule métallique (1), muni de nervures (2) au profil dépourvu d'arêtes vives, servant au moulage d'un réservoir dont la paroi (3) est constituée de matière thermoplastique. Les nervures (2) du moule provoquent la formation de nervures (4) similaires sur la surface intérieure du réservoir. Le moule est muni de deux réseaux perpendiculaires de nervures parallèles entre elles, ce qui permet de former également, sur la surface intérieure du réservoir, des réseaux perpendiculaires de nervures (4, 5) définissant des zones fermées rectangulaires (6) surbaissées par rapport au sommet des nervures (4).

On notera que les lignes pointillées visibles sur la figure 1 ne correspondent pas à des arêtes vives, mais à des raccordements progressifs (arrondis). On notera également que la figure 1 n'est que schématique, et que les dimensions et proportions des différents éléments qui y sont représentés ont été exclusivement choisies en vue de clarifier la figure.

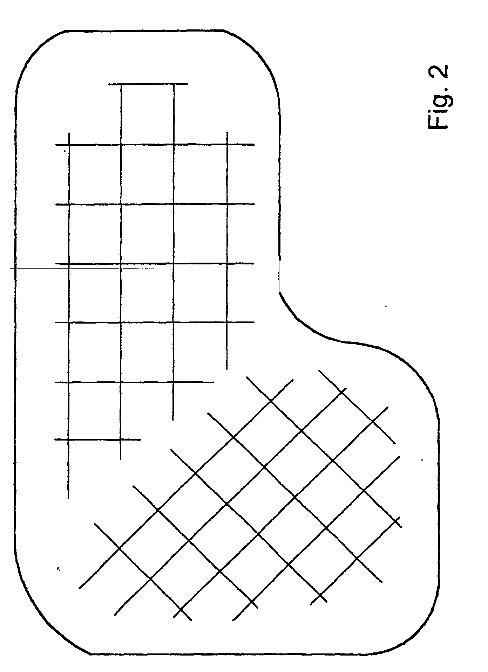

La figure 2 représente schématiquement la paroi inférieure d'un réservoir à carburant conforme à l'invention. On y distingue plusieurs réseaux de nervures parallèles, perpendiculaires deux à deux.

## Revendications

1. Réservoir à liquide essentiellement constitué de matière plastique, dont la surface intérieure (1) a été traitée superficiellement en vue d'accroître son imperméabilité audit liquide, **caractérisé en ce qu'**au moins une partie de la surface intérieure (1) du réservoir est munie de protubérances (4, 5) aptes à entraver le déplacement du liquide.

2. Réservoir à carburant selon la revendication 1.

3. Réservoir selon l'une des revendications précédentes, dans lequel la paroi du réservoir est constituée d'une seule matière plastique.

4. Réservoir selon l'une des revendications précédentes, dans lequel la surface intérieure du réservoir a été traitée par fluoration et/ou par sulfonation.

5. Réservoir selon l'une des revendications précédentes, dans lequel les protubérances se présentent sous la forme de nervures (4,5).

6. Réservoir selon la revendication précédente, dans lequel les nervures délimitent des zones fermées.

7. Réservoir selon la revendication précédente, dans lequel les nervures sont disposées selon des réseaux substantiellement perpendiculaires de nervures substantiellement rectilignes (4, 5), parallèles et équidistantes.

8. Réservoir selon l'une des revendications précédentes, dans lequel les protubérances ont une hauteur d'au plus 20 mm.

9. Réservoir selon l'une des revendications précédentes, dans lequel les protubérances ont un écartement de 20 à 100 mm.

10. Réservoir selon l'une des revendications précédentes, dans lequel au moins la paroi inférieure de la surface intérieure du réservoir est munie de protubérances.

## Patentansprüche

1. Im Wesentlichen aus Kunststoff bestehender Behälter für Flüssigkeit, dessen Innenseite (1) im Hinblick darauf, seine Undurchlässigkeit für die besagte Flüssigkeit zu vergrößern, oberflächlich behandelt worden ist, **dadurch gekennzeichnet, dass** mindestens ein Teil der Innenseite (1) des Behälters mit Vorsprüngen (4, 5) versehen ist, die fähig sind, die Verlagerung der Flüssigkeit zu hemmen.

2. Behälter für Kraftstoff nach Anspruch 1.

3. Behälter nach einem der vorangehenden Ansprüche, bei dem die Wand des Behälters aus einem einzigen Kunststoff besteht.

4. Behälter nach einem der vorangehenden Ansprüche, bei dem die innere Oberfläche des Behälters durch Fluorierung und/oder Sulfonierung behandelt worden ist.

5. Behälter nach einem der vorangehenden Ansprüche, bei dem sich die Vorsprünge in Form von Rippen (4, 5) zeigen.

6. Behälter nach dem vorangehenden Anspruch, bei dem die Rippen geschlossene Zonen begrenzen.

7. Behälter nach dem vorangehenden Anspruch, bei dem die Rippen in im Wesentlichen senkrechten Scharen von Rippen angeordnet sind, die im Wesentlichen geradlinig (4, 5), parallel und abstandsgleich sind.

8. Behälter nach einem der vorangehenden Ansprüche, bei dem die Vorsprünge eine Höhe von höchstens 20 mm aufweisen.

9. Behälter nach einem der vorangehenden Ansprüche, bei dem die Vorsprünge einen Abstand von 20 bis 100 mm aufweisen.

10. Behälter nach einem der vorangehenden Ansprüche, bei dem zumindest die untere Wand der Innenseite des Behälters mit Vorsprüngen versehen ist.

## Claims

1. Tank for a liquid, made essentially of plastic, the interior surface (1) of which has been surface treated so as to increase its impermeability to the said liquid, **characterized in that** at least part of the interior surface (1) of the tank has protrusions (4, 5) capable of impeding the movement of the liquid.

2. Fuel tank according to Claim 1.

3. Tank according to one of the preceding claims, in which the wall of the tank consists of a single plastic.

4. Tank according to one of the preceding claims, in which the interior surface of the tank has been treated by fluoration and/or by sulphonation.

5. Tank according to one of the preceding claims, in which the protrusions are in the form of ribs (4, 5).

6. Tank according to the preceding claim, in which the ribs delimit closed zones.

7. Tank according to the preceding claim, in which the ribs are arranged in roughly perpendicular networks of roughly straight (4, 5), parallel and equidistant ribs.

8. Tank according to one of the preceding claims, in which the protrusions are at most 20 mm tall.

9. Tank according to one of the preceding claims, in which the protrusions have a spacing of 20 to 100 mm.

10. Tank according to one of the preceding claims, in which at least the lower wall of the interior surface of the tank has protrusions.
